(19) Europäisches Patentamt
European Patent Office
Office européen des brevets

(11) EP 2 036 035 B1

(12) **EUROPEAN PATENT SPECIFICATION**

(45) Date of publication and mention of the grant of the patent:
**15.09.2010 Bulletin 2010/37**

(21) Application number: **06774253.6**

(22) Date of filing: **29.06.2006**

(51) Int Cl.:
***G06T 1/00*** *(2006.01)*

(86) International application number:
**PCT/US2006/025312**

(87) International publication number:
**WO 2008/004996 (10.01.2008 Gazette 2008/02)**

(54) **SYSTEM AND METHOD FOR OBJECT OREINTED FINGERPRINTING OF DIGITAL VIDEOS**

SYSTEM UND VERFAHREN FÜR OBJEKTORIENTIERTE FINGERABDRÜCKE DIGITALER VIDEOS

SYSTÈME ET PROCÉDÉ DE PRISE D'EMPREINTE ORIENTÉE OBJET DE VIDÉOS NUMÉRIQUES

(84) Designated Contracting States:
**DE ES FR GB IT**

(43) Date of publication of application:
**18.03.2009 Bulletin 2009/12**

(73) Proprietor: **Thomson Licensing**
**92130 Issy-les-Moulineaux (FR)**

(72) Inventors:
- **OSAWA, Ryoichi**
**Simi Valley, California 93063 (US)**
- **DERRENBERGER, Mike, Arthur**
**Hopkinton, Massachusetts 01748 (US)**

(74) Representative: **Ruellan-Lemonnier, Brigitte et al**
**Technicolor**
**1-5 rue Jeanne d'Arc**
**92130 Issy-les-Moulineaux (FR)**

(56) References cited:
**WO-A2-2004/097828**

- **SWANSON, MITCHELL D. AND ZHU, BIN AND CHAU, BENSON AND TEWFIK, AHMED H.: "Object-based Transparent Video Watermarking" ELECTRONIC PROCEEDINGS OF THE {IEEE} SIGNAL PROCESSING SOCIETY 1997 WORKSHOP ON MULTIMEDIA SIGNAL PROCESSING, [Online] 1997, XP002416782 Princeton, New Jersey Retrieved from the Internet: URL:http://citeseer.ist.psu.edu/ swanson97o bjectbased.html> [retrieved on 2007-01-24]**
- **BLOOM J A ET AL: "Watermarking to track motion picture theft" SIGNALS, SYSTEMS AND COMPUTERS. CONFERENCE RECORD OF THE THIRTY-EIGHTH ASILOMAR CONFERENCE ON PACIFIC GROVE, CA, USA, PISCATAWAY, NJ, IEEE, 7 November 2004 (2004-11-07), pages 363-367, XP010780296 ISBN: 0-7803-8622-1**
- **DARAS, P., KOMPATSIARIS, I., GRINIAS, I., AKRIVAS, G., TZIRITAS, G., KOLLIAS, S., STRINTZIS, M.G.: "MPEG-4 Authoring Tool Using Moving Object Segmentation and Tracking in Video Shots" EURASIP JOURNAL ON APPLIED SIGNAL PROCESSING, [Online] 2003, XP002416783 Retrieved from the Internet: URL: http://www.csd.uoc.gr/~tziritas/papers /MPEG4-Author.pdf> [retrieved on 2007-01-24]**
- **MEI-YI WU ET AL: "A robust object-based watermarking scheme based on shape selfsimilarity segmentation" MULTIMEDIA SOFTWARE ENGINEERING, 2003. PROCEEDINGS. FIFTH INTERNATIONAL SYMPOSIUM ON DEC. 10-12, 2003, PISCATAWAY, NJ, USA,IEEE, 10 December 2003 (2003-12-10), pages 110-114, XP010674703 ISBN: 0-7695-2031-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 036 035 B1

## Description

### TECHNICAL FIELD OF THE INVENTION

The present invention generally relates to film security, and more particularly, to a system and method for object oriented fingerprinting of digital videos and motion pictures.

### BACKGROUND OF THE INVENTION

Piracy concerns in connection with the theatrical exhibition of motion picture films are well known. Once a film distributor distributes prints of a motion picture film to exhibitors for theatrical exhibition, often a certain degree of control over the product is lost. For example, in the regular course of exhibiting the film in a theater, whether analog or digital, a customer in the theater may surreptitiously record the film using, e.g., a hand held camcorder during the exhibition. At a more sophisticated level, a person seeking to obtain an illegal copy of a film print may gain access to a theater projection booth in collusion with an employee of the exhibitor and make a copy of the film after hours in a relatively controlled environment. In such an environment, the audio from the projection equipment can be directly fed to the camcorder. A tripod can be used to ensure a clear and steady picture. As a result, an illicit copy of relatively high quality can be made. Alternatively, the print itself may be scanned to create a video master.

Such illicit "pirate" copies of a movie can now be distributed over the Internet or by using hard copies (video CDs or DVDs), and this reduces the economic value of the legitimate film distribution. With the advent of the Internet and affordable higher quality recording devices, this problem has become increasingly severe in recent years. Thus, a method for tracing the chain of people who produce this damage is highly desirable.

One way to combat this piracy is to watermark the movie content, e.g., a film print, digital video file, etc., in a way that pirated material can be traced back to the theater where it was leaked. This type of watermarking that is unique to each medium is called fingerprinting.

Perhaps the most natural scheme in watermarking digital content is to use invisible watermarks. This technology, however, has a serious limitation in survivability of the watermark. Such a watermark is likely to be lost or distorted through the capturing of the film by a camcorder, the conversion of the digital file to the analog format such as VHS (or even the conversion of the digital to the analog, and then back to digital format again), and the editing and distortions of the captured digital file.

The necessity of survivability has lead to visible watermarking schemes. The simplest form of visible watermarking is to put a warning sentence such as "Do not copy this material" or "the logo" of a studio (such as the WB™ logo of Warner Bros. studio) in the film. This type of watermark has a minimum effect, as it does not identify where the film was leaked from (that is, no fingerprinting application) as well as it is subject to an erasure by those who have stolen the film.

This has led to a more obscure visible watermark such as dots, which is currently in use to protect some of the films shown at movie theaters. In 1982, the Motion Picture Association of America (MPAA), together with the Kodak™ Corporation, developed a technology for uniquely identifying film prints. This technology is commonly known as Coded Anti-Piracy (CAP) coding. The code is a series of faint dots in the picture that are added as the print is manufactured. Approximately one out of every hundred frames contains four tiny dots that have been added to the image. Generally, 11 CAP-coded frames are required to reconstitute the seriai number of the movie point. Each unique configuration of dots corresponds to a print identifier. The film prints are usually coded for each particular theater in which a film is distributed. Although this type of watermark is still visible, it is not so apparent where the dots have been placed within a set of a small number of frames out of a large number of the frames in total.

However, the advent of digital video compression and distribution technologies has diminished the viability of CAP coding. Improved digital camcorders not only take higher quality pictures, but video compression algorithms (which are commonly employed when the pirated film is stored in a digital format or transported over the Internet) tend to obliterate the CAP codes. Namely, because the dots representing the code are extremely small and diffuse, they are susceptible to disintegration during video compression. Furthermore, the loss of a single CAP code dot during image compression can defeat the CAP coding scheme because the CAP code is represented by spatial image placement within the film frame. Indeed, CAP coding is dependent upon 100% image survival. Even further, some hackers still have found the dots and erased or modified them in certain cases. In addition, the frequency of code image repetition in CAP coding systems increases the likelihood that the public will see the image. This is undesirable as it can distract viewers from the film content or cause them to form an opinion that a particular theater shows poor quality prints.

As described, certain techniques for watermarking video are well known. In "Object-Based Transparent Video Watermarking" by Swanson et al (1997), a segment of a video frame, including an object, is extracted from the video content and a watermark embedded into the segment and object. In WO2004/097828 (Vizireanu et al), a system and method for marking film by embedding different forensic marks from copy to copy is disclosed. Also, in "Watermarking to Track Motion Picture Theft" by Bloom et al (2004), the technique of embedding data, such as imperceptible marks using spread spectrum techniques, into copies of film or video is discussed.

Overall, the current various schemes used to combat the piracy problem, both visible fingerprint markings and invisible digital fingerprints, have considerable disadvantages and limitations. The current invisible watermarking and fingerprinting schemes in general face 'the survivability problem', i.e., the marks may not survive through various distortions, format conversions, or the camcorder capture off the screen of theaters and TV monitors. On the other hand, traditional visible marks are subject to erasures no matter how obscure the embedded marks are.

Accordingly, a system and method for watermarking a film in a manner that provides a marked film that is robust and durable, avoids the limitations and deficiencies of CAP coding, and provides watermarks which have excellent survival despite pirating and compression is highly desirable

## SUMMARY

The present invention provides a system and method for object oriented fingerprinting of digital videos and motion pictures. Fingerprinting is a type of watermarking that is unique to each file or print, which is to be distributed to a particular entity. That is, a fingerprinting scheme can be used to identify, at the forensics stage, the entity that has illegally distributed or has leaked the print by matching the fingerprint found on the pirated material.

The system and method of the present invention enables a user to embed various 'natural objects' as watermarks that match well with a particular scene in the movie or to modify existing objects in the scene during a digital editing stage. Because of a variety of ways these natural objects can be embedded, or blended into the scene, it is possible to create a set of uniquely identifiable prints or digital video files. As an example, suppose a movie scene contains a shot of one living room with a fish tank in the background. The fish may be selected as the watermarks. Then, one can change the color of some fish in several ways, one can change the shape of them in several ways, or even add some more fish with computer graphics. Each combination of these attributes will generate a unique fingerprinting for the film.

According to one aspect of the present invention, a system for fingerprinting a plurality of copies of a single motion picture is provided. The system includes a prescreening device configured for selecting at least one scene of the single motion picture; the prescreening device including a watermarking module configured to select at least one object occurring in the at least one scene and for creating at least two variations of the at least one object; wherein the prescreening device creates at least one unique fingerprint for each of the plurality of copies of the single motion picture based on the at least one watermark and the at least two variations of the at least one watermark. The unique fingerprint is stored in an instruction data file.

In a further aspect, the system includes a fingerprinting device configured to receive the plurality of copies of the single motion picture and the instruction data file, wherein the fingerprinting device reads the instruction data file and determines a unique fingerprint for the each copy of the motion picture and applies the unique fingerprint to each copy of the motion picture.

In another aspect, the system includes a sink device including a fingerprinting module configured to receive the single motion picture and the instruction data file, wherein the fingerprinting module reads the instruction data file and determines a unique fingerprint for the single motion picture; and a rendering module configured to render the motion picture and to insert the at least one object of the fingerprint in the motion picture while the motion picture is being rendered.

According to another aspect, a method for fingerprinting a motion picture is provided, the method including the steps selecting at least one object occurring in at least one scene of the motion picture; creating a predetermined number of variations of the at least one object; and applying at least one variation of the at least one object to the motion picture.

In yet another aspect of the present invention, a method for fingerprinting a plurality of copies of a single motion picture is provided. The method includes the steps determining a number of unique copies of the motion picture needed; determining a number of watermarks and variations of the watermarks based on the number of unique copies; selecting at least one object occurring in at least one scene of the motion picture equal to the determined number of watermarks; creating the determined number of variations for the at least one object; and creating a unique combination of the created variations of the at least one object for each copy of the motion picture.

In a further aspect, a readable medium for storing a motion picture includes a plurality of scenes, each scene including a plurality of frames, each frame representing a portion of the motion picture, wherein at least one of the frames is watermarked to represent a unique fingerprint of the motion picture, wherein the fingerprint comprises at least one watermark, the at least one watermark being selected from an object occurring in the at least one frame, wherein the at least one watermark includes at least one variation unique to the fingerprint.

## BRIEF DESCRIPTION OF THE DRAWINGS

These, and other aspects, features and advantages of the present invention will be described or become apparent from the following detailed description of the preferred embodiments, which is to be read in connection with the accompanying drawings.

In the drawings, wherein like reference numerals denote similar elements throughout the views:

FIG. 1 is an exemplary illustration of a system for fingerprinting a motion picture according to an aspect of the present invention;

FIG. 2 is an exemplary illustration of a system for watermarking at least one frame of a motion picture according to an aspect of the present invention;

FIG. 3 is a flow diagram of an exemplary method for watermarking a film according to an aspect of the present invention;

FIG. 4 shows an illustrative table for determining a number of watermarks and variations of each watermark needed for a predetermined number of copies of a motion picture;

FIG. 5 shown an illustrative table of a watermarking instruction file according to an aspect of the present invention;

FIG. 6 is a schematic representation of a motion picture stored on a medium employed for determining placement of watermarks; and

FIG. 7 is an exemplary illustration of a real-time system for fingerprinting a motion picture according to an aspect of the present invention.

It should be understood that the drawing(s) is for purposes of illustrating the concepts of the invention and is not necessarily the only possible configuration for illustrating the invention.

## DETAILED DESCRIPTION OF PREFERRED EMBODIMENTS

It should be understood that the elements shown in the FIGS. may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present invention. It will thus be appreciated that those skilled in the art will be able to devise various arrangements that, although not explicitly described or shown herein, embody the principles of the invention.

All examples and conditional language recited herein are intended for teaching purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. It is thus regarded that any means that can provide those functionalities are equivalent to those shown herein.

A system and method is provided for object-oriented fingerprinting of digital videos and motion pictures. The system and method of the present invention uses various "natural objects" as the watermarks, natural in a sense that no viewer would find it awkward to see those objects in a scene of a movie. These objects are either selected out of the existing objects in the movie or simply being digitally inserted using photographic images or computer graphics. For example, a human character in one scene of a movie may be presented with some items being clearly visible on him, for example, he may be wearing an ID name tag, a particular style of watch, a bracelet, rings around fingers, a PDA, a cell phone, and so on. An implementer of the system and method will decide which objects 'become the watermarks' in advance and how these watermarks can be arranged to create fingerprints.

For example, if all of the above objects are selected to be the watermarks, the implementer could change the shape of the tag, change the style of the watch, the bracelet, the rings, the PDA, and the cell phone. The implementer can even put the rings on a different finger. If each change can produce, for example, four different variations, and if there are five objects for example, then there are $4^5$ = 1024 differentiations one can create and thus the same number of unique copies of the film or digital video file.

The system and method of the present invention can even insert objects, computer graphics images or photographic images, that are not even parts of the original shooting, as long as these new images or objects will blend in well with the background scene or are compatible with the scene. With current digital processing software, these additions can be done relatively easily.

Advantageously, the present invention provides a watermarking scheme for a motion picture that is clearly visible so that the marks will survive against almost all modifications; that makes it almost impossible for hackers, or even the audience, to recognize the mark as the watermark; and that can lead to fingerprinting of digitai videos, e.g., digital films, DVDs, etc. , and/or motion pictures.

As to the timing of the fingerprinting process, the implementer can either process it immediately after receiving a digital master and create unique copies with the fingerprinting scheme or process it at the rendering stage in real-time in the player devices.

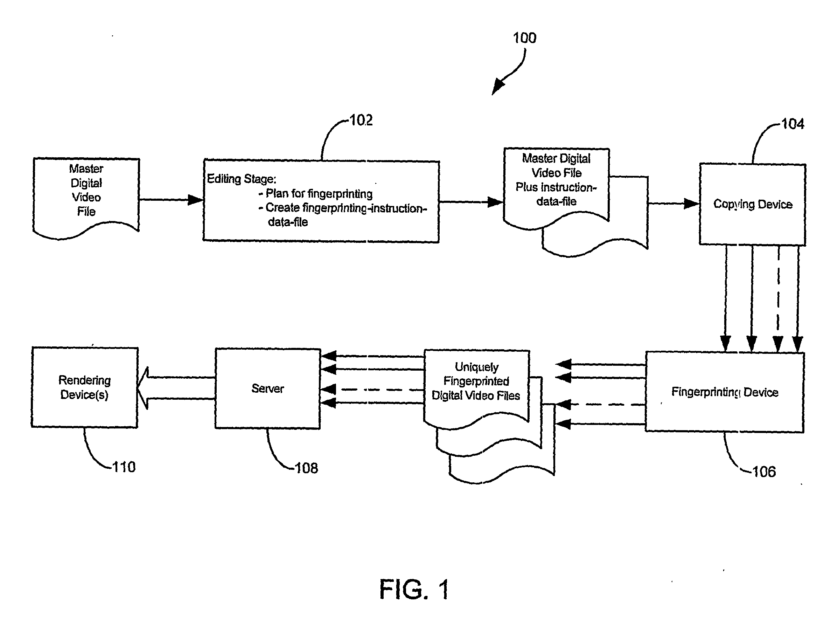

Referring to FiG. 1, an exempiary illustration of an overall system and method for fingerprinting a motion picture according to an aspect of the present invention is shown. The system 100 includes a prescreening device 102, e.g., a computer, for receiving a master digital video file. The prescreening device 102 may be employed in an editing stage of post-production of the motion picture. As will be described in more detail below, the prescreening device may determine a number and placement of watermarks to be placed on the motion picture and create a fingerprinting-instruction-data-file. The fingerprinting-instruction-data-file may be a separate file associated with the master digital video file or may be embedded into the master digital video file, e.g., in a header portion of the file.

The master digital video file plus instruction-data-file is then transmitted to a copying device 104 for duplicating the master digital video file into a predetermined number of copies. Each copy of the motion picture is then transferred to a fingerprinting device 106 which reads the instruction-data-file and applies watermarks to each copy of the motion picture, as defined in the instruction-data-file, to uniquely fingerprint each copy of the motion picture. The uniquely fingerprinted digital video files are then stored in server 108 for distribution where the uniquely fingerprinted digital video tiles will be played on a rendering device 110. In one embodiment, the server 108 is coupled to a writing device for producing each uniquely fingerprinted digital video file on a DVD (Digital Versatile Disc) to be played on any conventional DVD player, i.e., the rendering device. In another embodiment, the server 108 will distribute each uniquely fingerprinted digital video file on-demand to a STB (set-top-box), i.e., the rendering device, coupled to the server 108 via the Internet, cable, satellite, etc. In a further embodiment, the server 108 will distribute each uniquely fingerprinted digital video file to a digital projector, i.e., the rendering device, of a movie theater.

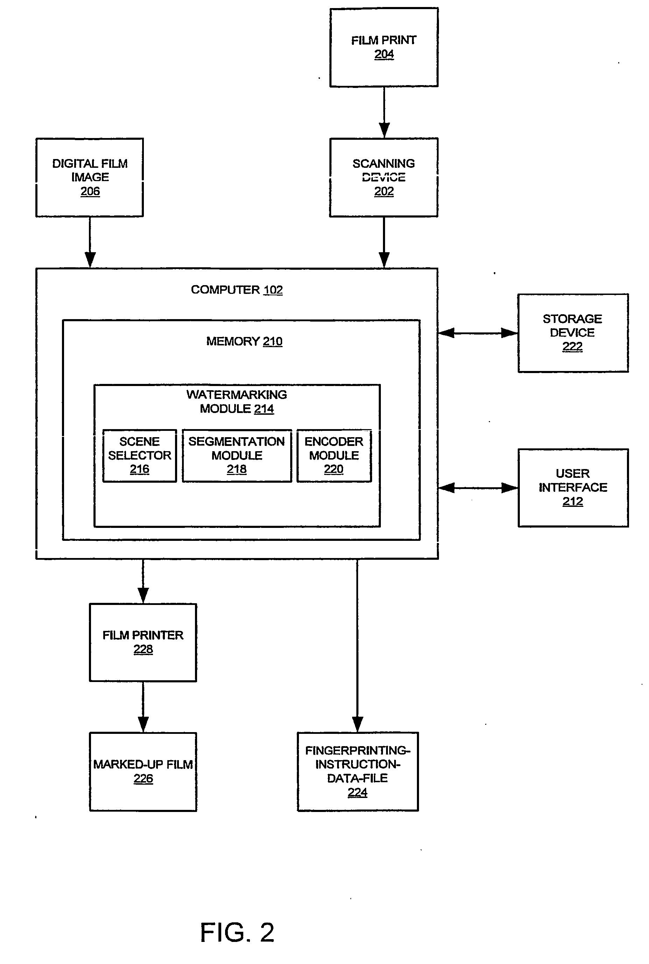

Exemplary system components of the prescreening device 102 for watermarking at least one frame of a motion picture according to an embodiment of the present invention are shown in FIG. 2. A scanning device 202 may be provided for scanning film prints 204, e.g., camera-original film negatives, into a digital format, e.g. Cineon-format or SMPTE DPX files. The scanning device 202 may comprise, e.g., a telecine or any device that will generate a video output from film such as, e.g., an Arri LocPro™ with video output. Alternatively, files from the post production process or digital cinema 206 (e.g., files already in computer-readable form) can be used directly. Potential sources of computer-readable files are AVID™ editors, DPX files, D5 tapes and the like.

Scanned film prints are input to the pre-screening device 102, e.g., a computer. The computer is implemented on any of the various known computer platforms having hardware such as one or more central processing units (CPU), memory 210 such as random access memory (RAM) and/or read only memory (ROM) and input/output (I/O) user interface(s) 212 such as a keyboard, cursor control device (e.g., a mouse or joystick) and display device. The computer platform also includes an operating system and micro instruction code. The various processes and functions described herein may either be part of the micro instruction code or part of a software application program (or a combination thereof) which is executed via the operating system. In addition, various other peripheral devices may be connected to the computer platform by various interfaces and bus structures, such a parallel port, serial port or universal serial bus (USB). Other peripheral devices may include additional storage devices 222 and a printer 228.

Alternatively, files/film prints already in computer-readable form 206 (e.g., digital cinema, which for example, may be stored on external hard drive 222) may be directly input into the computer 102. Note that the term "film" used herein may refer to either film prints or digital cinema.

A software program includes a watermarking module 214 stored in the memory 210. The watermarking module 214 includes a scene selector 216 for selecting a scene or a frame of a scene where the film is to be watermarked. The watermarking module 214 also includes a segmentation module 218 for segmenting an object selected to be the watermark and enabling the selected object to be available in different variations, e.g., different size, different color, etc.. Image segmentation is known in the art and any of the various known techniques may be employed with the present invention such as characteristic feature thresholding or clustering, edge detection and region extraction. It is to be understood the segmentation module 218 will also be able to insert an object that is not already existing in the frame or scene. An encoder module 220 is also provided to encode the variations of the watermarks into a value, e.g., a serial number, for identifying the motion picture.

Once the number of watermarks and variations per watermark have been determined, the watermarking module 214 will create a fingerprinting-instruction-data-file 224, as will be described below. The fingerprinting-instruction-data-file 224 may be stored on storage device 222 or on a server accessible via a network (e.g., Internet). In one embodiment, the prescreening device 102 will print via film printer 228 a marked-up film 226 containing various watermarks to be distributed to theater locations having conventional film projectors.

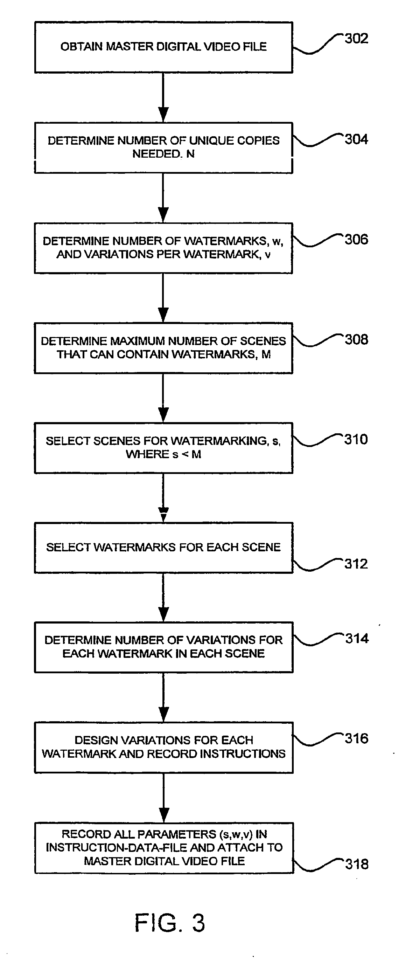

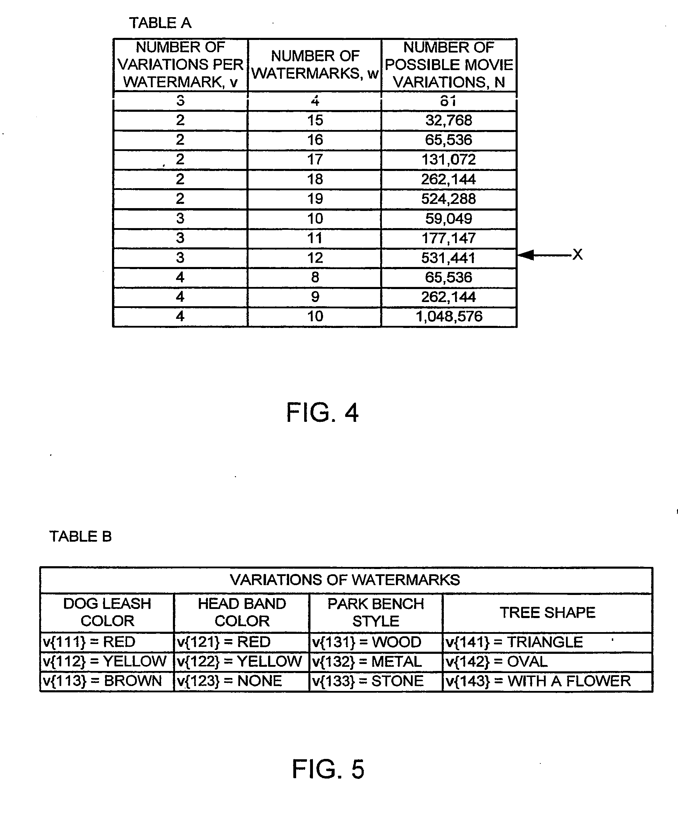

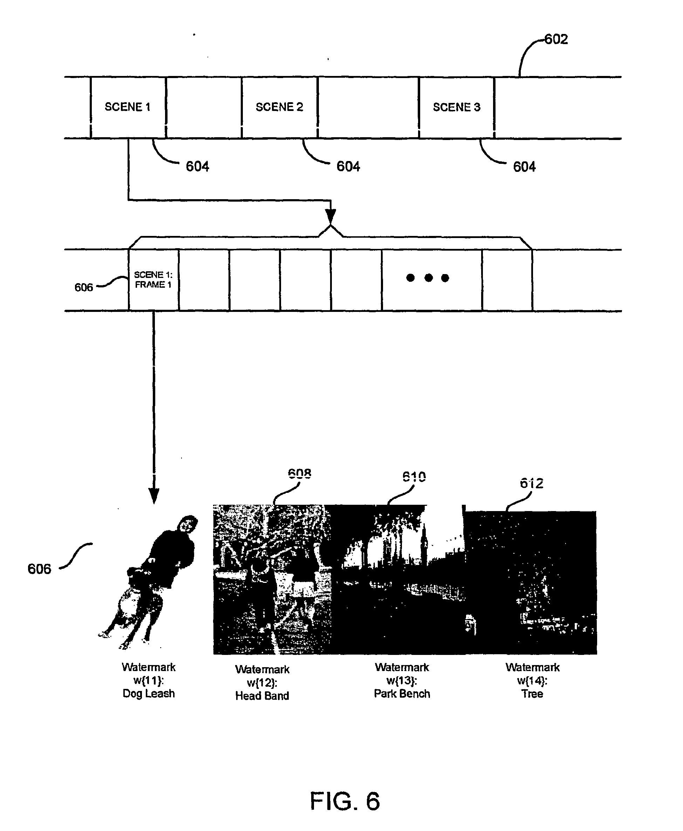

FIG. 3 is a flow diagram of an exemplary method for watermarking a film according to an aspect of the present invention. FIG. 4 shows an illustrative table for determining a number of watermarks and variations of each watermark needed for a predetermined number of copies of a motion picture and FIG. 5 shown an illustrative table of a watermarking instruction file according to an embodiment of the present invention. FIG. 6 is a schematic representation of a motion picture employed for determining placement of watermarks.

Referring to FIG. 3, in step 302, the prescreening device 102 obtains the digital master video file in a computer-readable format. If the film is not in computer-readable format, the film is scanned via scanning device 202 and the process proceeds to step 304. It is to be appreciated that whether the film is scanned or already in digital format, the digital file of the film will include indications or information on locations of the frames, e.g., a frame number, time from start of the film, etc. which will be uses in locating potential marking areas.

Next, a set of requirements for producing a plurality of uniquely fingerprinted digital video files is determined. In step 304, a number of unique copies, N, needed for distribution is determined. Based on the number of unique copies needed, a number of watermarks, w, and a number of variations per watermark, v, is determined in step 306. As an example, assume about 500,000 uniquely identifiable copies of a same movie title are needed for distribution. To determine how many watermarks, w, and how many variations of each watermark, v, are needed, the total number of movie variations possible is $v^w$. Table A illustrated in FIG.4 provides exemplary parameters using equation $v^w$ to determine a number of possible movie variations.

In step 308, a maximum number of scenes, M, that can contain a watermark is determined. Preferably, the maximum number of scenes, M, is determined by a user editing the film and is entered via the user interface 212. Next, in step 310, at least one scene, s, for watermarking is selected, where the selected scenes, s, are less than the maximum number of scenes, M. Referring to FIG. 6, a representation of a motion picture stored on a medium 602 is illustrated. The medium may include but is not limited to film print media, DVD, CD ROM, and magnetic disc as well as any other solid state, optical, electro-optical, magneto-optical storage formats as are now known or which may become known in the future. Regardless of whether the medium is a film print or a digital video file, it is to be understood the motion picture includes a plurality of scenes 604 and each scene 604 includes a plurality of frames 606 each containing an image.

If the number of watermarks is too large in one scene, perhaps because of the movie containing only simple scenes, then one can select the watermarks from several scenes. For example, referring to Table A of FIG. 4 and the above example of 500,000 unique copies of a movie title, '3 variations per watermark' and '12 watermarks' total may be selected as indicated by arrow x in Table A. A user may now select 4 watermarks each in Scene 1, Scene 2, and Scene 3 instead of 12 watermarks in one scene. However, in reality, the more watermarks are distributed over several scenes, the more it will be susceptible to an attack referred to as 'collusion attack,' in which a hacker creates a film consisting of several pirated versions of the same title. It is to be appreciated that not all watermarks have to have the same number of variations, i.e., each watermark can have a different number of variations.

In step 312, the watermarks for each scene are selected, $w\{sk_s\}$, where $k_s$ is the number of watermarks per scene s. For example, $w\{11\}$ to $w\{1k_1\}$ watermarks ($k_1$ in total) are selected for scene 1, $w\{21\}$ to $w\{1k_2\}$ watermarks ($k_2$ in total) are selected for scene 2, and so on, up to $w\{s1\}$ to $w\{sk_s\}$ watermarks ($k_s$ in total) are selected for scene s. Next, the number of variations for each watermark in each scene is determined at step 314. Each watermark $w\{ij\}$ has $r_{ij}$ many variations, $v\{ij1\}$ through $v\{ijr_{ij}\}$, where i ranges from 1 to s , and j ranges from 1 to $k_i$. Therefore, all of the parameters must satisfy the requirement:

$$\Pi\{i=1,\ldots,s\}\Pi\{j=1,\ldots,k_i\}\ r_{ij} > N$$

In step 316, the variations for each watermark is designed or determined and recorded, for example, in a database stored on storage device 222.

A simple example will be described in relation to FIGS. 5 and 6 to illustrate the principles of the present invention. In the example, one scene 604, e.g., scene 1, is selected. The scene includes a plurality of frames with naturally occurring objects in each frame. For simplicity, four frames 606, 608, 610, 612 of scene 1 are illustrated. If a user selects four watermarks, i.e., objects, and three variations per watermark, using the formula described above, $3^4$ = 81 versions of a motion picture can be created. The watermarks and variations per watermark selected from frames 606, 608, 610 612 may be designed as follows:

Watermark 1:Pick the dog with a leash:

Variations

a. Red leash
b. Yellow leash
c. Brown leash

Watermark 2: Pick a jogger in the park in the distance:

Variations

a. A red head band
b. A yellow head band
c. No head band

Watermark 3: Pick or insert a bench:

Variations

a. Wooden kind
b. Metal kind
c. Stool/Stone kind

Watermark 4: Pick a tree:

Variations

a. Triangle shape
b. Oval shape
c. Triangle with a flower next to it

After the watermarks are selected and variations designed, this information is stored in a table such as Table B illustrated in FIG. 5. It is to be appreciated one can devise a more general parameter assignment, i.e., the number of variations for watermarks need not be fixed: each watermark can have its unique number of variations, where each scene may have its unique number of watermarks.

After creating the variations of the watermarks, the encoder module 220 will encode a unique combination of variations of watermarks for each version of a motion picture into a unique value - that is, the prescreening device will serialize the versions. There are many ways to do this, and the present invention does not specify any particular method. In one embodiment, all the combinations of the watermark-variations are listed and enumerated. Using the example above, the prescreening device will simply serialize as follows:

*"1" = {v{111}, v{121}, v{131}, v{141}}*
*"2" = {v{111}}, v{121}, v{131}, v{142}}*
*"3" = {v{111}, v{121}, v{131}, v{143}}*
*"4" = {v{111}, v{121}, v{132}, v{141}}*
*"5" = {v{111}, v{121}, v{132}, v{142}}*
*"6" = {v{111}, v{121}, v{132}, v{143}}*
*and so on up to:*
*"81 " = {v{113}, v{123}, v{133}, v{143}}*

Here, recall that v{i j $r_{ij}$} refers to a variation $r_{ij}$ for the scene 'i' and the watermark object 'j.' For example, v{1 3 2} indicates the second variation for the first scene and the third watermark-object, which is the 'metal park bench' as illustrated in FIG. 5.

Another way to serialize the versions of the motion picture is to consider each watermark as one digit and assign the number of bits needed to represent each digit. In this embodiment, one needs to fix the maximum number of scenes (S), the maximum number of watermarks (W), and the maximum number of variations (V) beforehand. Then, one can see that there are SW many watermarks in total, where each watermark requires [$\log_2$V] bits to express the value, where [x] is the upper-ceiling function: the least integer that is greater than or equal to x. The total number of bits needed here is S*W [$\log_2$V] Again using the example above, S= 3, W=4, and V=3. Therefore, 3*4*[$\log_2$3]=3*4*2=24 bits will be needed to serialize all the movie versions. There are 12 watermarks in all, where 2 bits express all the watermark variations. For example, "01-01-01-10" (the first eight bits only for the Scene 1; the next 16 bits for Scene 2 and Scene 3 are omitted for simplicity) may represent the combination *{v{111}, v{121}, v{131}, v{142}}*. Here, "01 = 1 in binary so we picked the first variations *v{111}, v {121}, and v{131}* for the first three watermarks, while since "10" = 2 in binary so we picked the second variations *v{142}* for the fourth watermark. "11" would be assigned to the third variations, while there is no need to use "00" in this case. In effect, "01-01-01-10" for Scene 1 (the next 16 bits for Scene 2 and Scene 3 are omitted for simplicity) indicates "RED leash," "RED headband," "WOOD bench," and "OVAL tree." (See FIG. 5)

After serializing all the versions of a same title, all the parameters (e.g., scenes, watermarks and variations) and instructions for creating the variations are stored in the instruction-data-file (step 318). The instruction-data-file is then attached to the master digital video file. The master digital video file and instruction-data-file are then employed with the copying device 104 and fingerprinting device 106 to create uniquely fingerprinted digital video files, as described above.

Additionally, the server 108 may bind the version or serial number of each uniquely fingerprinted digital video file or motion picture to a specific display device, i.e., rendering device. Each display device should have a unique number, for example, the MAC address or the 'device key' that is assigned by, e.g., a licensing authority. The server will then store and maintain a record binding the device's ID and the version number of a title to be used to identify a source of a pirated version of the title. For example, after recovering a pirated copy of a motion picture, the fingerprint will be determined and decoded to a value, e.g., the serial number, for identifying the source of the copy of the motion picture.

Furthermore, after recovering a pirated content with a fingerprint, the server 108 will revoke the license of the device associated with the pirated copy, e.g., if the device is coupled to the Internet. Preferably, the device will be required to register with the server 108 before being able to view the content. Revoking of licenses for content is known in the art and any of the various known methods may be employed with the present invention.

The system and method of the present invention enable a watermarking scheme wherein the watermarks are visible and robust enough to survive modification while making the watermarks impossible for hackers, or even audiences, to recognize the mark as a watermark. For example, an implementer of the system and method can simply focus on the objects, e.g., the watermark, that are associated with the objects that only appear in one scene, such as a passerby or a passing car on a street or an insignificant character that appears only once. In this way, the changes introduced would not interfere with the film quality and would not introduce inconsistencies within the film, which in turn would likely get an approval from the director or the producers. Even if the fingerprinting scheme ended up creating some inaccuracies or inconsistencies, the fact is that most Hollywood movie fans would be indifferent to the details of accuracies or inaccuracies of the films. In fact, inconsistencies and (scientific) inaccuracies in the movies are quite rampant, where most viewers wouid not even notice.

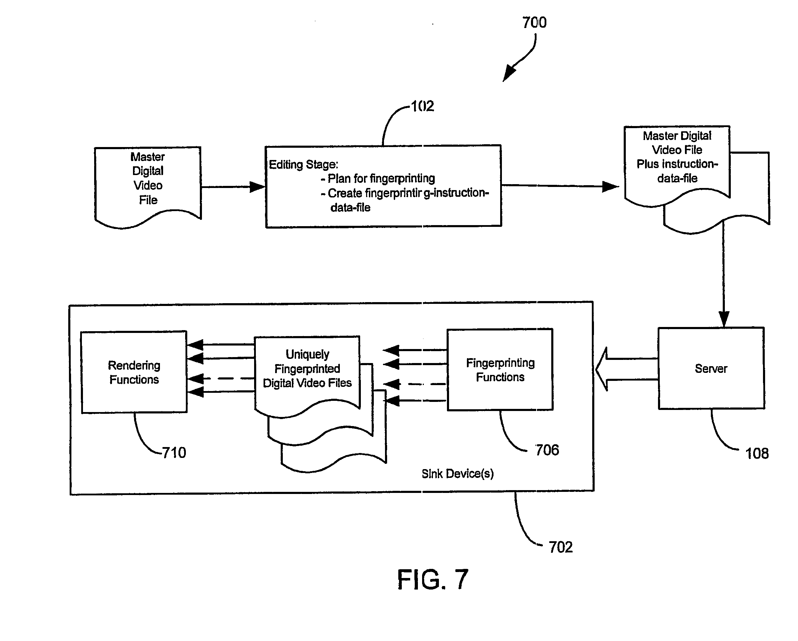

Referring back to FIG. 1, the fingerprinting device 106 is in the source-side of the movie production workflow, that is, the fingerprinting device 106 is located before the server 108 for distribution. In another embodiment of the present invention, a system for fingerprinting a motion picture is provided in FIG. 7, where the fingerprinting of the motion picture is rendered outside the source-side and is pushed to the sink-side of the production workflow, i.e., beyond the location of the server 108. In this embodiment, a sink device 702 will include a fingerprinting module 706 and a rendering module 710. The fingerprinting module 706 will read the instruction-data-file and insert objects in real-time creating the uniquely fingerprinted video file which is rendered for viewing via the rendering module 710.

The fingerprinting module 706 may insert objects as watermarks into a frame of a motion picture, where each watermark may have a plurality of variations as described above. The objects may be inserted into the frame by various known technologies. One such technology is called D'fusion developed by Total Immersion of Suresnes, The D'fusion technology allows the integration of animated virtual objects into videos, live or recorded, in real-time. D'fusion technology works based on using any standard motion-capture sensors; the sensors are carried by the actors or attached to the moving objects so that the locations of the virtual objects can be placed within the film where the sensors are located. The technology can also use a pre-recorded trajectory of a sensor or object in the scene so that the virtual object can follow it. This includes the case when the trajectory is replaced with a point so that the inserted object will be static in the scene. Therefore, using the above technology, a set of pre-recorded points may be embedded in a scene during editing so that (natural) watermark objects can be embedded in real-time at those points.

The present invention is not limited to the use of the above technology, any technology that can integrate animated virtual objects (or even 'real objects') into the video file or motion picture in real-time would accomplish this implementation of the fingerprinting scheme. A technology that enables 'object tracking' in videos, for example, may also allow the implementation of the fingerprinting scheme. One such technology is augmented reality (AR), which tracks objects using markers placed in a scene before filming.

The sink devices 702, for example, could be the next generation Digital Cinema projectors or even the next generation HD DVD players. But the fingerprinting scheme of the present invention will be security-wise, most effective when the sink devices with the fingerprinting functions are trusted devices - that is, when the devices are designed tamper-proof and/or are physically or network-wise located outside a general public domain. This means that Digital Cinema projectors would be better candidates than DVD players, as the latter are located in a general public domain, where the users are free to reverse-engineer them, while the former are more restricted in terms of who can access them. Furthermore, the instruction-data-file must be tamper-free.

The system and method for object oriented real-time fingerprinting of digital videos and motion pictures described herein improves over conventional systems in that the comparison among severai versions of a same title to discover the watermark objects in the scheme of the present invention is much more difficult, and because of which, it would be extremely difficult to apply a collusion attack. The size of the video file in the scheme of the present invention does not change during the distribution stage. The size of the video file changes only when the video is about to be rendered. For example, the size may go up slightly if a graphic object has been inserted.

Although the embodiment which incorporates the teachings of the present invention has been shown and described in detail herein, those skilled in the art can readily devise many other varied embodiments that still incorporate these teachings. Having described preferred embodiments for a system and method for object oriented fingerprinting of digital videos and motion pictures (which are intended to be illustrative and not limiting), it is noted that modifications and variations can be made by persons skilled in the art in light of the above teachings.

## Claims

**1.** A system (100,700) for fingerprinting a plurality of copies of a single motion picture, the system comprising:

a prescreening device (102) that receives a video file of the single motion picture and is configured for selecting at least one scene of the single motion picture; the prescreening device including
a watermarking module (214) configured to select at least one object occurring in the at least one scene and for creating at least two variations of the at least one object, the at least two variations of the at least one object created by changing at least one of color, shape, style, and existence of the at least one object;
wherein the prescreening device (102) creates at least one unique fingerprint for each of the plurality of copies of the single motion picture based on the at least two variations of the at least one object.

**2.** The system as in claim 1, wherein the watermarking module (214) further includes a segmentation module (218) configured to segment the selected at least one object from the at least one scene and to create the at least two variations of the segmented at least one object.

**3.** The system as in claim 1, further comprising a fingerprinting device (106) configured to receive the plurality of copies of the single motion picture and an instruction data file (224), the instruction data file (224) containing the at least one unique fingerprint, wherein the fingerprinting device (106) reads the instruction data file (224) and determines a unique fingerprint for the each copy of the motion picture and applies the unique fingerprint to each copy of the motion picture.

**4.** The system as in claim 1, further comprising a sink device (702) comprising:

a fingerprinting module (706) configured to receive the single motion picture and an instruction data file (224), the instruction data file (224) containing the at least one unique fingerprint, wherein the fingerprinting module (706) reads the instruction data file (224 and determines a unique fingerprint for the single motion picture; and
a rendering module (710) configured to render the motion picture and to insert the at least one object of the fingerprint in the motion picture while the motion picture is being rendered.

**5.** The system as in claim 1, wherein the watermarking module (214) further comprises an encoder module (220) configured to encode the at least one watermark and the at least two variations of the at least one watermark into a value for identifying the motion picture.

**6.** A method for fingerprinting a motion picture, the method comprising the steps:

selecting at least one object occurring in at least one scene (604) of the motion picture (312);
creating a predetermined number of variations of the at least one object (314), each of the variations of the at least one object created by changing at least one of color, shape, style, and existence of the at least one object; and
applying at least one variation of the at least one object, the object representing a watermark, to the motion picture (316).

**7.** The method as in claim 6, wherein the applying step is performer during rendering of the motion picture.

**8.** The method as in claim 6, wherein the selected at least one object appears in the at least one scene and is segmented from the at least one scene.

**9.** The method as in claim 6, wherein the selecting step includes selecting at least one object not originally appearing in the at least one scene, the at least one object being compatible with the at least one scene.

**10.** The method as in claim 6, wherein the selecting step further comprises selecting a plurality of objects, wherein at least a portion of the plurality of objects are selected from different scenes.

**11.** The method as in claim 6, further comprising the step encoding the at least one variation of the at least one object into a value for identifying the motion picture.

**12.** A readable medium (602) for storing a motion picture, the motion picture comprising:

a plurality of scenes (604), each scene including a plurality of frames (606, 608, 610, 612), each frame (606, 608, 610, 612) representing a portion of the motion picture, wherein at least one of the frames (606, 608, 610, 612) is watermarked to represent a unique fingerprint of the motion picture,

wherein the fingerprint comprises at least one watermark, the at least one watermark being selected from an object occurring in the at least one frame, wherein the at least one watermark includes at least one variation unique to the fingerprint and the at least one variation unique to the fingerprint is created by changing at least one of color, shape, style, and existence of at least one object in at least one of the frames.

**13.** The readable medium (602) as in claim 12, wherein the at least one variation of the at least one watermark is decodable to a value for identifying a copy of the motion picture.

**Patentansprüche**

**1.** System (100, 700), um eine Mehrzahl von Kopien eines einzelnen Bewegtbilds mit Fingerabdrücken zu versehen, wobei das System umfasst:

eine Vorselektierungsvorrichtung (102), die eine Videodatei des einzelnen Bewegtbilds empfängt und die zum Auswählen mindestens einer Szene des einzelnen Bewegtbilds konfiguriert ist; wobei die Vorselektierungsvorrichtung enthält:

ein Modul (214) zum Versehen mit einem Wasserzeichen, das so konfiguriert ist, dass es mindestens ein in der mindestens einen Szene auftretendes Objekt auswählt und mindestens zwei Änderungen des mindestens einen Objekts erzeugt, wobei die mindestens zwei Änderungen des mindestens einen Objekts durch Ändern der Farbe und/oder der Form und/oder des Stils und/oder des Vorhandenseins des mindestens einen Objekts erzeugt werden;

wobei die Vorselektierungsvorrichtung (102) für jede Kopie der Mehrzahl von Kopien des einzelnen Bewegtbilds auf der Grundlage der mindestens zwei Änderungen des mindestens einen Objekts mindestens einen eindeutigen Fingerabdruck erzeugt.

**2.** System nach Anspruch 1, bei dem das Modul (214) zum Versehen mit einem Wasserzeichen ferner ein Segmentierungsmodul (218) enthält, das zum Segmentieren des ausgewählten mindestens einen Objekts von der mindestens einen Szene und zum Erzeugen der mindestens zwei Änderungen des segmentierten mindestens einen Objekts konfiguriert ist.

**3.** System nach Anspruch 1, das ferner eine Vorrichtung (106) zum Versehen mit einem Fingerabdruck umfasst, die so konfiguriert ist, dass sie die Mehrzahl von Kopien des einzelnen Bewegtbilds und eine Anweisungsdatendatei (224) empfängt, wobei die Anweisungsdatendatei (224) den mindestens einen eindeutigen Fingerabdruck enthält, wobei die Vorrichtung (106) zum Versehen mit einem Fingerabdruck die Anweisungsdatendatei (224) liest und für jede Kopie des Bewegtbilds einen eindeutigen Fingerabdruck bestimmt und den eindeutigen Fingerabdruck auf jede Kopie des Bewegtbilds anwendet.

**4.** System nach Anspruch 1, das ferner eine Senkenvorrichtung (702) umfasst, die umfasst:

ein Modul (706) zum Versehen mit einem Fingerabdruck, das zum Empfangen des einzelnen Bewegtbilds und einer Anweisungsdatendatei (224) konfiguriert ist, wobei die Anweisungsdatendatei (224) den mindestens einen eindeutigen Fingerabdruck enthält, wobei das Modul (706) zum Versehen mit einem Fingerabdruck die Anweisungsdatendatei (224) liest und für das einzelne Bewegtbild einen eindeutigen Fingerabdruck bestimmt; und
ein Rendering-Modul (710), das zum Rendern des Bewegtbilds und zum Einfügen des mindestens einen Objekts des Fingerabdrucks in das Bewegtbild, während das Bewegtbild gerendert wird, konfiguriert ist.

**5.** System nach Anspruch 1, bei dem das Modul (214) zum Versehen mit einem Wasserzeichen ferner ein Codierermodul (220) umfasst, das zum Codieren des mindestens einen Wasserzeichens und der mindestens zwei Änderungen des mindestens einen Wasserzeichens zu einem Wert zum Identifizieren des Bewegtbilds konfiguriert ist.

**6.** Verfahren, um ein Bewegtbild mit einem Fingerabdruck zu versehen, wobei das Verfahren die folgenden Schritte umfasst:

Auswählen mindestens eines Objekts, das in mindestens einer Szene (604) des Bewegtbilds (312) auftritt;
Erzeugen einer vorgegebenen Anzahl von Änderungen des mindestens einen Objekts (314), wobei jede der Änderungen des mindestens einen Objekts durch Ändern der Farbe und/oder der Form und/oder des Stils und/oder des Vorhandenseins des mindestens einen Objekts erzeugt wird; und
Anwenden mindestens einer Änderung des mindestens einen Objekts, wobei das Objekt ein Wasserzeichen repräsentiert, auf das Bewegtbild (316).

**7.** Verfahren nach Anspruch 6, bei dem der Schritt des Anwendens während des Renderns des Bewegtbilds ausgeführt wird.

**8.** Verfahren nach Anspruch 6, bei dem das ausgewählte mindestens eine Objekt in der mindestens einen Szene erscheint und von der mindestens einen Szene segmentiert wird.

**9.** Verfahren nach Anspruch 6, bei dem der Schritt des Auswählens das Auswählen mindestens eines Objekts enthält, das ursprünglich nicht in der mindestens einen Szene erschien, wobei das mindestens eine Objekt mit der mindestens einen Szene kompatibel ist.

**10.** Verfahren nach Anspruch 6, bei dem der Schritt des Auswählens ferner das Auswählen einer Mehrzahl von Objekten umfasst, wobei mindestens ein Teil der Mehrzahl von Objekten von unterschiedlichen Szenen ausgewählt werden.

**11.** Verfahren nach Anspruch 6, das ferner den Schritt des Codierens der mindestens einen Änderung des mindestens einen Objekts zu einem Wert zum Identifizieren des Bewegtbilds umfasst.

**12.** Lesbares Medium (602) zum Speichern eines Bewegtbilds, wobei das Bewegtbild umfasst:

eine Mehrzahl von Szenen (604), wobei jede Szene eine Mehrzahl von Einzelbildern (606, 608, 610, 612) enthält, wobei jedes Einzelbild (606, 608, 610, 612) einen Teil des Bewegtbilds repräsentiert, wobei mindestens eines der Einzelbilder (606, 608, 610, 612) mit einem Wasserzeichen versehen ist, um einen eindeutigen Fingerabdruck des Bewegtbilds zu repräsentieren,
wobei der Fingerabdruck mindestens ein Wasserzeichen umfasst, wobei das mindestens eine Wasserzeichen aus einem Objekt ausgewählt ist, das in dem mindestens einen Einzelbild auftritt, wobei das mindestens eine Wasserzeichen mindestens eine Änderung enthält, die für den Fingerabdruck eindeutig ist, und wobei die mindestens eine für den Fingerabdruck eindeutige Änderung durch Ändern der Farbe und/oder der Form und/oder des Stils und/oder des Vorhandenseins mindestens eines Objekts in mindestens einem der Einzelbilder erzeugt wird.

**13.** Lesbares Medium (602) nach Anspruch 12, bei dem die mindestens eine Änderung des mindestens einen Wasserzeichens zu einem Wert zum Identifizieren einer Kopie des Bewegtbilds decodierbar ist.

**Revendications**

**1.** Système (100, 700) de marquage d'une pluralité de copies d'un film unique, le système comprenant :

un dispositif de pré-visionnage (102) qui reçoit un fichier vidéo du film unique et est configuré pour sélectionner au moins une scène du film unique ; le dispositif de pré-visionnage incluant un module de tatouage numérique (214) configuré pour sélectionner au moins un objet apparaissant dans la au moins une scène et pour créer au moins deux variations de le au moins un objet, les au moins deux variations de le au moins un objet créées en modifiant au moins un élément parmi la couleur, la forme, le style et l'existence de le au moins un objet ;
où le dispositif de pré-visionnage (102) crée au moins une marque unique pour chacune de la pluralité de copies du film unique, en fonction des au moins deux variations de le au moins un objet.

**2.** Système selon la revendication 1, où le module de tatouage numérique (214) inclut en outre un module de segmentation (218) configuré pour segmenter le au moins un objet sélectionné à partir de la au moins une scène et pour créer les au moins deux variations de le au moins un objet segmenté.

**3.** Système selon la revendication 1, comprenant en outre un dispositif de marquage (106) configuré pour recevoir la pluralité de copies du film unique et un fichier de données d'instructions (224), le fichier de données d'instructions (224) contenant la au moins une marque unique, où le dispositif de marquage (106) lit le fichier de données d'instructions (224) et détermine une marque unique pour chaque copie du film et applique la marque unique à chaque copie du film.

**4.** Système selon la revendication 1, comprenant en outre un dispositif récepteur (702) comprenant :

un module de marquage (706) configuré pour recevoir le film unique et un fichier de données d'instructions (224), le fichier de données d'instructions (224) contenant la au moins une marque unique, où le module de marquage (706) lit le fichier de données d'instructions (224) et détermine une marque unique pour le film unique ; et
un module de rendu (710) configuré pour restituer le film et pour insérer le au moins un objet de la marque dans le film tandis que le film est en cours de restitution.

**5.** Système selon la revendication 1, où le module de tatouage numérique (214) comprend en outre un module de codage (220) configuré pour coder le au moins un tatouage numérique et les au moins deux variations de le au moins un tatouage numérique en une valeur permettant d'identifier le film.

**6.** Procédé de marquage d'un film, le procédé comprenant les étapes suivantes :

> sélection d'au moins un objet apparaissant dans au moins une scène (604) du film (312) ;
> création d'un nombre prédéterminé de variations de le au moins un objet (314), chacune des variations de le au moins un objet créée en modifiant au moins un élément parmi la couleur, la forme, le style et l'existence de le au moins un objet ; et
> application de la au moins une variation de le au moins un objet, l'objet représentant un tatouage numérique, sur le film (316).

**7.** Procédé selon la revendication 6, où l'étape d'application est réalisée lors de la restitution du film.

**8.** Procédé selon la revendication 6, où le au moins un objet sélectionné apparaît dans la au moins une scène et est segmenté à partir de la au moins une scène.

**9.** Procédé selon la revendication 6, où l'étape de sélection inclut la sélection de le au moins un objet n'apparaissant pas à l'origine dans la au moins une scène, le au moins un objet étant compatible avec la au moins une scène.

**10.** Procédé selon la revendication 6, où l'étape de sélection comprend en outre la sélection d'une pluralité d'objets, où au moins une partie de la pluralité d'objets est sélectionnée à partir de différentes scènes.

**11.** Procédé selon la revendication 6, comprenant en outre l'étape de codage de la au moins une variation de le au moins un objet en une valeur permettant d'identifier le film.

**12.** Support lisible (602) pour stocker un film, le film comprenant :

> une pluralité de scènes (604), chaque scène incluant une pluralité de trames (606, 608, 610, 612), chaque trame (606, 608, 610, 612) représentant une partie du film, où au moins une des trames (606, 608, 610, 612) est soumise à un tatouage numérique pour représenter une marque unique du film,
> où la marque comprend au moins un tatouage numérique, le au moins un tatouage numérique étant sélectionné à partir d'un objet apparaissant dans la au moins une trame, où le au moins un tatouage numérique inclut au moins une variation unique à la marque et la au moins une variation unique à la marque est créée en modifiant au moins un élément parmi la couleur, la forme, le style et l'existence de le au moins un objet dans au moins une des trames.

**13.** Support lisible (602) selon la revendication 12, où la au moins une variation de le au moins un tatouage numérique peut être décodée en une valeur permettant d'identifier une copie du film.

100
Master Digital Video File
102
Editing Stage:
- Plan for fingerprinting
- Create fingerprinting-instruction-data-file
Master Digital Video File Plus instruction-data-file
104
Copying Device
106
Fingerprinting Device
Uniquely Fingerprinted Digital Video Files
108
Server
110
Rendering Device(s)

FIG. 1

FILM PRINT
204
DIGITAL FILM
IMAGE
206
SCANNING
DEVICE
202
COMPUTER 102
MEMORY 210
WATERMARKING
MODULE 214
SCENE
SELECTOR
216
SEGMENTATION
MODULE
218
ENCODER
MODULE
220
STORAGE
DEVICE
222
USER
INTERFACE
212
FILM PRINTER
228
MARKED-UP FILM
226
FINGERPRINTING-
INSTRUCTION-
DATA-FILE
224

FIG. 2

OBTAIN MASTER DIGITAL VIDEO FILE
302
DETERMINE NUMBER OF UNIQUE COPIES NEEDED. N
304
DETERMINE NUMBER OF WATERMARKS, w, AND VARIATIONS PER WATERMARK, v
306
DETERMINE MAXIMUM NUMBER OF SCENES THAT CAN CONTAIN WATERMARKS, M
308
SELECT SCENES FOR WATERMARKING, s, WHERE s < M
310
SELECT WATERMARKS FOR EACH SCENE
312
DETERMINE NUMBER OF VARIATIONS FOR EACH WATERMARK IN EACH SCENE
314
DESIGN VARIATIONS FOR EACH WATERMARK AND RECORD INSTRUCTIONS
316
RECORD ALL PARAMETERS (s,w,v) IN INSTRUCTION-DATA-FILE AND ATTACH TO MASTER DIGITAL VIDEO FILE
318

FIG. 3

TABLE A

| NUMBER OF VARIATIONS PER WATERMARK, v | NUMBER OF WATERMARKS, w | NUMBER OF POSSIBLE MOVIE VARIATIONS, N |
|---|---|---|
| 3 | 4 | 81 |
| 2 | 15 | 32,768 |
| 2 | 16 | 65,536 |
| 2 | 17 | 131,072 |
| 2 | 18 | 262,144 |
| 2 | 19 | 524,288 |
| 3 | 10 | 59,049 |
| 3 | 11 | 177,147 |
| 3 | 12 | 531,441 |
| 4 | 8 | 65,536 |
| 4 | 9 | 262,144 |
| 4 | 10 | 1,048,576 |

X

FIG. 4

TABLE B

| VARIATIONS OF WATERMARKS | | | |
|---|---|---|---|
| DOG LEASH COLOR | HEAD BAND COLOR | PARK BENCH STYLE | TREE SHAPE |
| v{111} = RED | v{121} = RED | v{131} = WOOD | v{141} = TRIANGLE |
| v{112} = YELLOW | v{122} = YELLOW | v{132} = METAL | v{142} = OVAL |
| v{113} = BROWN | v{123} = NONE | v{133} = STONE | v{143} = WITH A FLOWER |

FIG. 5

602
SCENE 1
SCENE 2
SCENE 3
604
604
604
606
SCENE 1:
FRAME 1
608
610
612
606
Watermark
w{11}:
Dog Leash
Watermark
w{12}:
Head Band
Watermark
w{13}:
Park Bench
Watermark
w{14}:
Tree

FIG. 6

700
Master Digital Video File
102
Editing Stage:
- Plan for fingerprinting
- Create fingerprintir g-instruction-data-file
Master Digital Video File Plus instruction-data-file
Server
108
Sink Device(s)
702
Fingerprinting Functions
706
Uniquely Fingerprinted Digital Video Files
Rendering Functions
710

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004097828 A, Vizireanu